# EUROPÄISCHE PATENTSCHRIFT

(11) **EP 3 081 278 B1**
(45) Veröffentlichungstag und Bekanntmachung des Hinweises auf die Patenterteilung: **13.09.2017**
(21) Anmeldenummer: 16163800.2
(22) Anmeldetag: 05.04.2016
(51) Int. Cl.: B01D 41/04

(54) **ANORDNUNG ZUM REINIGEN EINES RUNDFILTERS**
ASSEMBLY FOR CLEANING A CIRCULAR FILTER
SYSTEME DE NETTOYAGE DE CYCLOFILTRE

(30) Priorität: 15.04.2015 AT 503002015
(43) Veröffentlichungstag der Anmeldung: 19.10.2016
(73) Patentinhaber: Putz, Stefan, 4822 Bad Goisern (AT)
(72) Erfinder: Putz, Stefan, 4822 Bad Goisern (AT)
(74) Vertreter: Naessens, Stephan

(56) Entgegenhaltungen:
- AT-B- 403 014
- DE-A1-102004 055 597
- DE-U1-202011 050 453

## Beschreibung

Die vorliegende Erfindung betrifft eine Anordnung zum Reinigen eines Rundfilters, gemäß der im Oberbegriff des Anspruches 1 näher definierten Art.

Filter werden beispielsweise in der Fahrzeugtechnik vielseitig eingesetzt. In Kraftfahrzeugen werden Rundfilter zur Luftreinigung eingesetzt. Aus Kostengründen ist es üblich, dass derartige Rundfilter bei Verringerung des Luftdurchsatzes regelmäßig gereinigt werden, um deren Lebensdauer zu erhöhen. Es ist bekannt, dass verschmutzte Rundfilter beispielsweise manuell mittels Druckluft gereinigt werden. Dies ist jedoch zeit- und arbeitsaufwändig. Zudem wird die Umwelt aufgrund des dabei entstehenden Feinstaubes belastet.

Beispielsweise aus der Druckschrift AT 403 014 B ist eine Reinigungsvorrichtung für Filter und Filtermatten bekannt, bei der Luftstrahldüsen vorgesehen sind, die entlang der Längsachse des Filters bewegt werden. Hierzu ist der Filter in einer Reinigungskammer auf einer drehbaren Grundplatte vorgesehen, wobei entlang der Filterinnenseite eine in Längsrichtung verfahrbare innere Reinigungsdüse und eine entlang der Filteraußenseite verfahrbare äußere Reinigungsdüse vorgesehen sind. Ferner ist der Reinigungskammer eine Absaugung zugeordnet.

DE 10 2004 055597 A1 beschreibt eine Reinigungsvorrichtung für Filter, umfassend eine Filteraufnahme zur Aufnahme des Filters, sowie eine mit einem Reinigungsmedium beaufschlagbare Düse zur Reinigung des Filters, wobei die Filteraufnahme zur drehbaren Aufnahme des Filters ausgestaltet ist und die Düse über eine Positioniereinrichtung mit der Filteraufnahme verbunden ist. Die Positioniereinrichtung umfasst einen Stellmotor und eine vertikal angeordnete Stange, wobei ein horizontal ausgerichteter Ausleger an der Stange angebracht ist. Die Düse ist verschiebbar auf dem Ausleger angebracht und wird während der Rotation des Filters von einer Anfangsposition am äußeren Rand des Filters in eine Endposition in der Mitte des Filters verfahren.

Es hat sich gezeigt, dass der Reinigungseffekt mit der bekannten Reinigungsvorrichtung sehr gering ist, da durch die lediglich in Längsrichtung des Filters verfahrbaren Reinigungsdüsen nur ein quasi linienförmiges Anblasen der Oberfläche der Filterinnenseite und der Filteraußenseite des Filters erfolgt. Demzufolge kann die gesamte Oberfläche des Rundfilters nicht oder nur mit erheblichem zeitlichen Aufwand gereinigt werden, welches die Reinigungskosten nachteilig beeinflusst.

Der vorliegenden Erfindung liegt die Aufgabe zu Grunde, eine Anordnung der eingangs beschriebenen Gattung vorzuschlagen, bei der schnell und kostengünstig eine vollständige Reinigung der Filteroberfläche realisiert wird.

Diese Aufgabe wird erfindungsgemäß durch die Merkmale des Anspruches 1 gelöst, wobei sich vorteilhafte Ausgestaltungen aus den Unteransprüchen und der Beschreibung sowie den Zeichnungen ergeben.

Demnach wird eine Anordnung zum Reinigen von Rundfiltern mit zumindest einer Reinigungskammer mit einem antreibbaren Drehteller zur Aufnahme des Filters und mit zumindest einer die innere und/oder äußere Oberfläche des Filters anblasenden Reinigungsdüse vorgeschlagen. Erfindungsgemäß ist zumindest ein um eine Rotationsachse rotierender Rotor mit zumindest einer radial von der Rotationsachse beabstandeten Reinigungsdüse zum Vergrößern der Anblasfläche vorgesehen, wobei die Rotationsachse des Rotors in einem vorbestimmten Winkel (α) zur Längsachse des Filters ausgerichtet ist und wobei der Winkel (α) einen Wert von etwa 80 Grad bis 100 Grad, bevorzugt 90 Grad aufweist. Mit der erfindungsgemäßen Anordnung wird eine Luftfilterreinigungsanlage z. B. für Kraftfahrzeug-Rundfilter unterschiedlicher Abmessungen vorgeschlagen. Durch das Drehen des Filters auf dem Drehteller und durch das zusätzliche Drehen des Rotors und der zumindest einen daran befestigten Reinigungsdüse können sich die Luftfilterlippen an der zu reinigenden Oberfläche des Filters in vorteilhafter Weise öffnen und der vorhandene Staub kann gründlich durch den auftreffenden Luftstrom ausgeblasen werden. Zudem wird aufgrund der Rotation der mit Luft durchströmten Reinigungsdüsen die Anblasfläche vergrößert, sodass sich eine besonders einfache und schnelle Reinigungsmöglichkeit mit besonders hoher Reinigungsleistung ergibt. Demzufolge können mit der vorgeschlagenen Anordnung ohne weiteres auch Filter von Arbeitsmaschinen, wie z. B. Baggern, Radladern oder dergleichen gründlich gereinigt werden, die in besonders staubiger Umgebung eingesetzt werden. Mit der erfindungsgemäßen Anordnung können somit Ressourcen eingespart und letztendlich die Umwelt geschont werden.

Vorzugsweise ist die Rotationsachse des Rotors in einem vorbestimmten Winkel zur Längsachse des Filters ausgerichtet, wobei der Winkel einen Wert von etwa 80 Grad bis 100 Grad, bevorzugt 90 Grad aufweist. Im bevorzugten Fall ist die Rotationsachse somit im rechten Winkel zur Filterachse bzw. zur Längsachse des Filters ausgerichtet, so dass der Luftaustrittsstrahl aus den Reinigungsdüsen etwa senkrecht auf die Oberfläche des Filters auftrifft. Es hat sich gezeigt, dass die Ausrichtung im rechten Winkel von Rotationsachse bzw. Luftaustrittsstrahl und Filterachse besonders hohe Reinigungswirkung durch das Absprengen bzw. Wegdrücken von anhaftenden Staubpartikeln ermöglicht. Dadurch ergeben sich demzufolge wesentliche Reinigungsvorteile gegenüber bekannten Anordnungen.

Bei der vorgeschlagenen Anordnung wird durch jeden rotierenden Rotor mit zumindest einer oder mehreren Reinigungsdüsen somit eine etwa kreisförmige Bewegung der Reinigungsdüsen mit wählbarem Durchmesser um die Rotationsachse je nach radialer Anordnungsposition der Reinigungsdüse an dem Rotor bzw. je nach Wahl des Rotordurchmessers realisiert. Durch die gleichzeitige Drehbewegung des Rundfilters auf dem Drehteller ergibt sich eine etwa ringförmige Anblasfläche entlang des Umfanges, deren Breite etwa dem Rotordurchmesser bzw. dem doppelten radialen Abstand der Reinigungsdüse von der Rotationsachse entspricht. Wenn der Rotor gleichzeitig in Längsachsenrichtung des Filters verstellt wird, ergibt sich ein schraubenlinienförmiger Verlauf am Umfang des Filters. Die erzeugte Anblasfläche ermöglicht nicht nur eine optimale Reinigung der Oberfläche des Rundfilters sondern verkürzt aufgrund der vergrößerten Anblasfläche die Reinigungsdauer erheblich.

Vorzugsweise können der Außenoberfläche des Rundfilters und der Innenoberfläche jeweils ein Rotor mit mehreren Reinigungsdüsen zur Reinigung des Rundfilters zugeordnet werden. Zum Reinigen der gesamten Oberfläche des Rundfilters können die Rotoren, die der inneren Oberfläche und der äußeren Oberfläche des Rundfilters zugeordnet sind, in Längsachsenrichtung beispielsweise über einen zugeordneten Hubantrieb oder dergleichen verfahren werden. Durch die vorgesehene Längsverstellung der Rotoren kann auf weitere Rotoren in vorteilhafter Weise verzichtet werden. Vorzugsweise können die Reinigungsphasen von innerem und äußerem Rotor gleichzeitig oder auch nacheinander durchgeführt werden und je nach Verschmutzungsgrad mehrfach wiederholt werden.

Es ist jedoch auch denkbar, dass mehrere in Längsachsenrichtung des Filters übereinander angeordnete Rotoren im Inneren des Rundfilters und/oder auch an der Außenseite des Rundfilters angeordnet sind, ohne dass eine Verstellbarkeit des Rotors in Längsachsenrichtung notwendig ist. Auf diese Weise können die Hubantriebe eingespart werden.

Die Drehgeschwindigkeit des Drehtellers und die Hubgeschwindigkeit des Rotors sowie die Drehgeschwindigkeit des Rotor bzw. der Reinigungsdüsen kann entsprechend eingestellt werden, um optimale, an den jeweils zu reinigenden Filter angepasste Reinigungsleistungen zu erzielen.

Nachfolgend wird die vorliegende Erfindung anhand der Figuren weiter erläutert. Es zeigen:
Figur 1 eine schematische Ansicht einer möglichen Ausführungsvariante einer erfindungsgemäßen Anordnung mit der inneren Oberfläche und der äußeren Oberfläche des Rundfilters zugeordneten Rotoren;
Figur 2 eine vergrößerte schematische Teilansicht der Anordnung mit einem der äußeren Oberfläche des Rundfilters zugeordneten Rotor;
Figur 3 eine schematische Einzelteilansicht des Rotors mit zwei Reinigungsdüsen;
Figur 4 eine schematische Teilansicht der Anordnung mit dem Rotor in einer unteren Verstellposition;
Figur 5 eine Teilansicht der Anordnung mit dem Rotor in einer oberen Verstellposition; und
Figur 6 eine schematische Einzelteilansicht des Luftleitelementes.

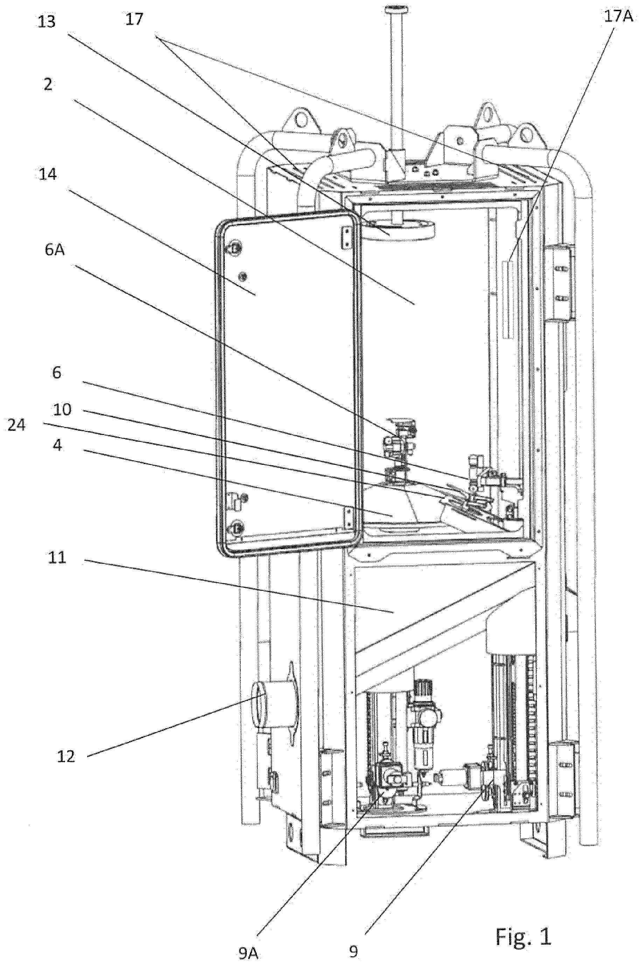

In den Figuren 1 bis 6 ist eine Anordnung zum Reinigen eines Filters, insbesondere eines Rundfilters 1 beispielhaft anhand mehrerer Ansichten dargestellt.

Die Anordnung umfasst eine Reinigungskammer 2 mit einem Drehteller 4 zur Aufnahme des Rundfilters 1. Die Oberfläche des Drehtellers 4 ist beispielsweise mit Moosgummi oder dergleichen versehen, um dicht an der Unterseite des Rundfilters 1 anzuliegen. Ferner ist ein der Oberseite des Rundfilters 1 zugeordnetes Anpresselement 13 vorgesehen, mit dem der Rundfilter 1 auf den Drehteller 4 pressbar ist. Vorzugsweise ist das Anpresselement 13 ebenfalls mit elastischem Material, wie zum Beispiel Moosgummi oder dergleichen versehen, sodass auch die Oberseite des Rundfilters 1 möglichst luftdicht an dem Anpresselement 13 anliegt. Die Reinigungskammer 2 weist eine verschließbare Tür 14 auf.

Zum Reinigen des Rundfilters 1 sind bei dem dargestellten Ausführungsbeispiel ein erster Rotor 6 mit z. B. zwei Reinigungsdüsen 5 der äußeren Oberfläche des Rundfilters 1 und ein zweiter Rotor 6A mit z. B. zwei Reinigungsdüsen 5A der inneren Oberfläche des Rundfilters 1 zugeordnet, wobei theoretisch jeweils eine Reinigungsdüse 5, 5A an jedem Rotor 6, 6A ausreichend wäre. Die Rotationsachsen 7, 7A der Rotoren 6, 6A sind etwa in einem Winkel ϕ von 90 Grad zur Längsachse bzw. Drehachse 8 des Rundfilters 1 ausgerichtet. Demzufolge trifft der Luftaustrittsstrahl aus den Reinigungsdüsen 5, 5A jeweils etwa senkrecht auf die innere und äußere Oberfläche des Rundfilters 1. Dadurch, dass der Innenraum des Rundfilters 1 durch das Anpresselement 13 und den Drehteller 4 abgedichtet ist, baut sich im Innenraum des Rundfilters 1 durch die aus den Reinigungsdüsen 5 A des Rotors 6 A austretende Luft ein Überdruck auf, sodass der Rundfilter 1 von innen nach außen ausgeblasen wird. Die aus den Reinigungsdüsen 5 des ersten bzw. äußeren Rotors 6 austretende Luft bewirkt ein Ablösen der auf der Außenfläche des Rundfilters 1 anhaftenden Partikeln. Durch den im Innenraum wirkenden Überdruck werden die Partikel quasi von der Außenfläche des Rundfilters 1 abgesprengt und entfernt.

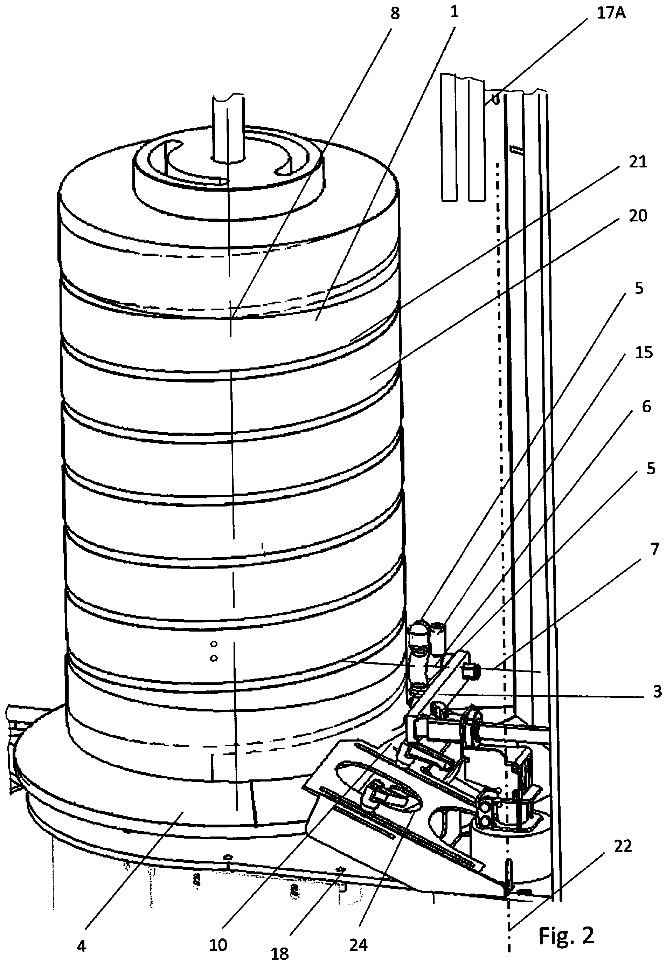

Bei dem gezeigten Ausführungsbeispiel der erfindungsgemäßen Anordnung ist die Längsachse 8 des Rundfilters 1 vertikal auf dem Drehteller 4 und die Rotationsachse 7, 7A jedes Rotors 6, 6A horizontal in der Reinigungskammer 2 ausgerichtet. Jeder Rotationsachse 7, 7A des ersten Rotors 6 und des zweiten Rotors 6A ist über einen zugeordneten Hubantrieb 9, 9A in Längsachsenrichtung des Rundfilters 1 verstellbar. Dies ist beispielhaft in den Figuren 2 sowie 4 und 5 dargestellt, wobei die Verstell- und Drehrichtungen durch Pfeile angedeutet sind.

Sowohl der erste Rotor 6 als auch der zweite Rotor 6A weisen jeweils zwei einander radial gegenüberliegende Reinigungsdüsen 5, 5A auf. Die Reinigungsdüsen 5, 5A sind somit einander radial bezogen auf die Rotationsachse (7, 7A) beabstandet, wobei der radiale Abstand der Reinigungsdüsen 5, 5A etwa dem Rotordurchmesser entspricht. Durch die Luftbeaufschlagung der Reinigungsdüsen 5, 5A des jeweiligen Rotors 6, 6A und die dadurch aus den Düsen austretende Luft wird der jeweilige Rotor 6, 6A in Rotation versetzt. Zum Einstellen einer jeweils gewünschten Rotationsgeschwindigkeit des jeweiligen Rotors 6, 6A sind an jedem Rotor 6, 6A radial verstellbare Gewichte 15 oder dergleichen vorgesehen. Je nach Anordnungsposition der Gewichte 15 kann damit die Rotationsdrehzahl verändert werden. Es ist auch möglich, die Rotationsdrehzahl durch die zugeführte Luftmenge zu verändern. Ferner wäre auch ein separater Antrieb der Rotoren 6, 6A denkbar.

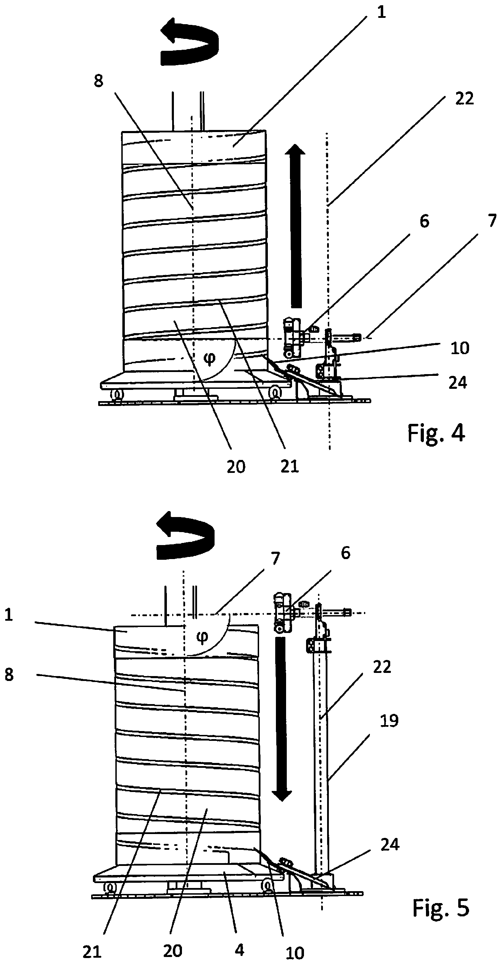

Aus Figur 2 und aus den Figuren 4 und 5 wird deutlich, dass der Rotor 6 mit der horizontal ausgerichteten Rotationsachse 7 über eine Halterung 13 versetzt bezogen auf die vertikal ausgerichtete Hubachse 22 angeordnet ist. Vorzugsweise ist die Rotationsachse 7 derart seitlich versetzt zur Hubachse 22 angeordnet, dass die Rotationsachse 7 und die Hubachse 22 keinen gemeinsamen Schnittpunkt haben. Durch eine derartige versetzte Anordnung des Rotors 6 wird die Reinigungsleistung weiter erhöht. Vorzugsweise ist der Rotor 6 bezogen auf den Rotor 6A im Inneren des Rundfilters 1 derart angeordnet, dass der Austrittsstrahl der Reinigungsdüsen 5 des Rotors 6 und der Austrittsstrahl der Reinigungsdüsen 5A des Rotors 6A in die gleiche Richtung gerichtet sind.

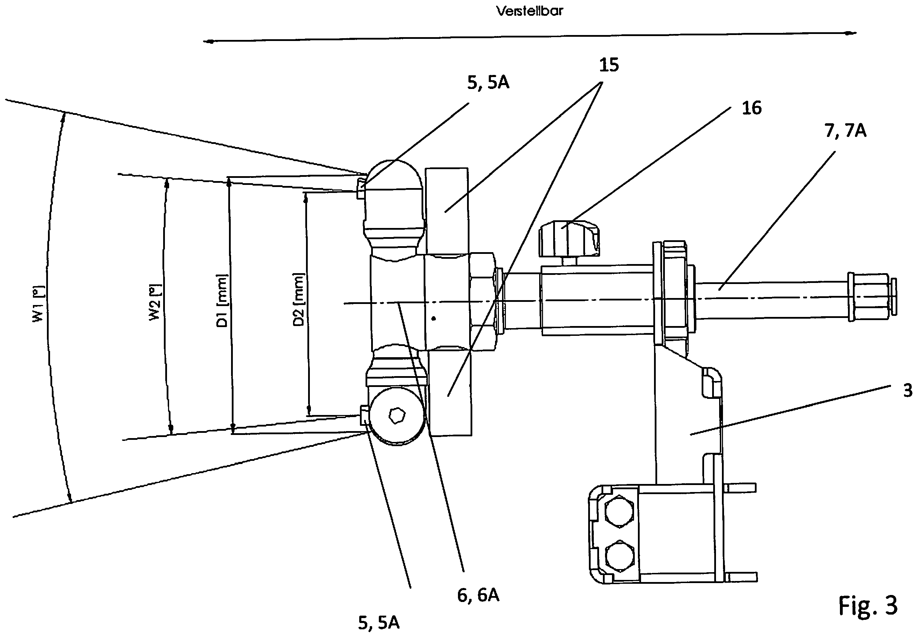

In Figur 3 ist eine Einzelteilansicht beispielhaft für einen der Rotoren 6, 6A zur Reinigung des Rundfilters 1 vergrößert dargestellt. Aus Figur 3 ist ersichtlich, dass der Abstand zwischen den sich gegenüberliegenden Reinigungsdüsen 5, 5A jedes Rotors 6, 6A den Durchmesser D1, D2 der Anblasfläche 20 auf dem Rundfilter 1 bildet, wobei beispielhaft zwei unterschiedliche Durchmesser D1, D2 bzw. Abstände der Reinigungsdüsen 5, 5A angedeutet sind. Zur Veränderung des Luftaustrittswinkels W1, W2 an jeder Reinigungsdüse 5, 5A ist vorgesehen, dass diese verstellbar an dem jeweiligen Rotor 6, 6A angeordnet sind. In Figur 3 sind beispielsweise zwei unterschiedliche Luftaustrittswinkel W1, W2 an den Reinigungsdüsen 5, 5A angedeutet.

Ferner ist aus Figur 3 ersichtlich, dass zumindest der Rotor 6 entlang der Rotationsachse 7 längenverstellbar ist, welches durch einen entsprechenden Pfeil angedeutet ist. Hierzu ist zum Beispiel eine Klemmschraube 16 an der Halterung 3 vorgesehen, um den Rotor 6 entlang der Rotationsachse 7 zu verstellen. Über die Halterung 3 wird eine räumlich versetzte Anordnung des Rotors 6 an dem Teleskoprohr 19 befestigt, um den Rotor 6 über den zugeordneten Hubantrieb 9 in Längsachsenrichtung zu verstellen, welches insbesondere in Figur 4 und 5 gezeigt ist.

Die Drehgeschwindigkeit des Drehtellers 4 und die Hubgeschwindigkeit zur Verstellung des jeweiligen Rotors 6, 6A in Längsachsenrichtung wird derart gewählt, dass sich bei jeder Umdrehung des Drehtellers 4 ein sich in Längsachsenrichtung des Rundfilters 1 erstreckender Überlappungsbereich 21 bei der in Schraubenlinienform umlaufenden Anblasfläche 20 des Rundfilters 1 ergibt, welches in den Figuren 4 und 5 durch den markierten Überlappungsbereich 21 dargestellt ist.

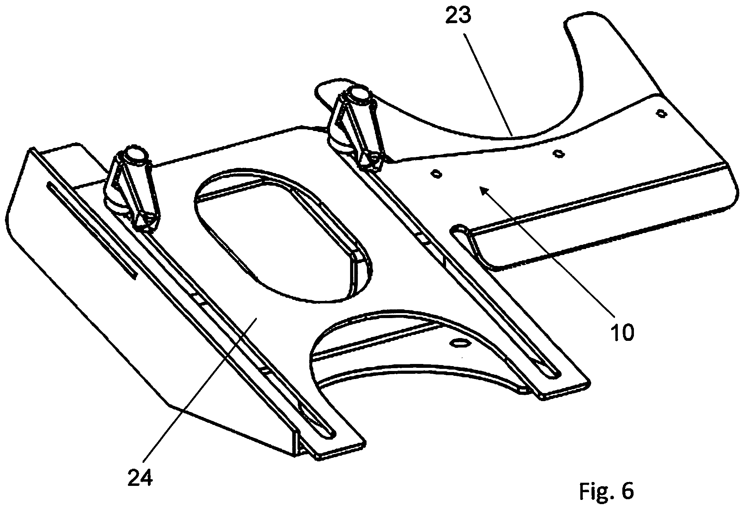

Wie beispielsweise aus Figur 1 und 2 ersichtlich ist, wird ein unterhalb des Rotors 6 angeordnetes Luftleitelement 10 zur Führung des Luftstromes zur Oberfläche des Rundfilters 1 vorgesehen, sodass der Luftstrom vom Drehteller 4 weg auf die Filteroberfläche gerichtet ist. Mit dem in Figur 6 dargestellten Luftleitelement bzw. Verstellblech 10 wird das Eindringen des Staubes in den Rundfilter 1 verhindert, da der aus den Reinigungsdüsen 5, 5A austretende Luftstrom immer an den Rundfilter 1 angestellt ist. Das Luftleitelement 10 ist verstellbar, um an den jeweiligen Außendurchmesser des Rundfilters 1 und an die jeweilige Rotorposition angepasst zu werden. Ferner ist der dem Rundfilter 1 zugewandte Bereich des Luftleitelements 10 mit einem Radius 23 versehen, bevorzugt aus einem elastischen Material, um an den Radius der äußeren Oberfläche des Rundfilters 1 möglichst optimal angepasst zu sein. Das Luftleitelement 10 ist über ein Verstellelement 24 in der Reinigungskammer 2 verstellbar befestigt.

Das Verstellelement 24 umfasst einen Verstellbereich, der mit dem Luftleitelement 10 verbunden ist, und einen in der Reinigungskammer 2 ortsfest angeordneten Befestigungsbereich. Der Verstellbereich ist über Verstellmittel an dem Befestigungsbereich in vorbestimmter Verstellposition arretierbar. An dem Verstellbereich ist der Radius 23 des Luftleitelements 10 vorgesehen.

Wie insbesondere aus Figur 6 ersichtlich ist, ermöglicht das Verstellelement 24 eine in Richtung des Rundfilters 1 gerichtete Bewegung, so dass entsprechend des Radius des Rundfilters eine optimale Ausrichtung des Luftleitelements 10 an der Filteroberfläche unterhalb des ersten Rotors 6 ermöglicht wird.

Unterhalb des Drehtellers 4 ist eine Staubsammelkammer 11 vorgesehen, die durch eine Mittelplatte 18 von der Reinigungskammer 2 getrennt ist. Die Staubsammelkammer 11 weist einen Anschlussstutzen 12 zum Anschließen an die Absaugung auf. Als Absaugung kann ein mobiles Absaugungsgerät oder auch eine stationäre Anlage mit entsprechender Luftaufbereitung eingesetzt werden.

Um eine vorteilhafte Sogwirkung in der Reinigungskammer 2 zu erzeugen, können an der Oberseite und/oder an den Seitenwänden der Reinigungskammer 2 Lufteintrittsschlitze 17, 17A zur Zwangsluftführung vorgesehen sein. Auf diese Weise wird der Staub möglichst schnell in die Staubsammelkammer 11 geführt.

### Bezugszeichen

- 1: Rundfilter
- 2: Reinigungskammer
- 3: Halterung
- 4: Drehteller
- 5,5A: Reinigungsdüsen
- 6: erster Rotor
- 6A: zweiter Rotor
- 7,7A: Rotationsachse
- 8: Längsachse bzw. Drehachse des Rundfilters
- 9,9A: Hubantrieb
- 10: Luftleitelement
- 11: Staubsammelkammer
- 12: Anschlussstutzen
- 13: Anpresselement
- 14: Tür
- 15: Gewicht
- 16: Klemmschraube
- 17,17A: Luftschlitze
- 18: Mittelplatte
- 19: Teleskoprohr
- 20: Anblasfläche
- 21: Überlappung
- 22: Hubachse
- 23: Radius
- 24: Verstellelement
- W1,W2: Luftaustrittswinkel
- D1,D2: Durchmesser
- ϕ: Winkel zwischen Rotationsachse der Rotoren und Längsachse des Filters

## Patentansprüche

1. Anordnung zum Reinigen eines Rundfilters (1), mit einer Reinigungskammer (2) mit einem antreibbaren Drehteller (4) zur Aufnahme des Filters und mit zumindest einer die innere und/oder äußere Oberfläche des Filters anblasenden Reinigungsdüse (5, 5A), **dadurch gekennzeichnet, dass** zumindest ein um eine Rotationsachse (7, 7A) rotierender Rotor (6, 6A) mit zumindest einer radial von der Rotationsachse (7, 7A) beabstandeten Reinigungsdüse (5, 5A) zum Vergrößern der Anblasfläche (20) vorgesehen ist, wobei die Rotationsachse (7, 7A) des Rotors (6, 6A) in einem vorbestimmten Winkel (α) zur Längsachse (8) des Filters ausgerichtet ist, wobei der Winkel (α) einen Wert von etwa 80 Grad bis 100 Grad, bevorzugt 90 Grad aufweist.

2. Anordnung nach Anspruch 1, **dadurch gekennzeichnet, dass** die Längsachse (8) des Filters etwa vertikal und die Rotationsachse (7, 7A) des Rotors (6, 6A) etwa horizontal in der Reinigungskammer (2) ausgerichtet sind.

3. Anordnung nach einem der vorangehenden Ansprüche, **dadurch gekennzeichnet, dass** zumindest ein erster Rotor (6) der äußeren Oberfläche des Filters und zumindest ein zweiter Rotor (6A) der inneren Oberfläche des Filters zugeordnet ist.

4. Anordnung nach Anspruch 3 **dadurch gekennzeichnet, dass** zumindest dem ersten Rotor (6) ein unterhalb des Rotors (6) angeordnetes Luftleitelement (10) zur Führung des Luftstromes zur Oberfläche des Filters zugeordnet ist.

5. Anordnung nach Anspruch 4, **dadurch gekennzeichnet, dass** ein dem Filter zugewandter Bereich des Luftleitelements (10) einen Radius (23) zum Anpassen an die Filteroberfläche aufweist.

6. Anordnung nach Anspruch 4 oder 5, **dadurch gekennzeichnet, dass** das Luftleitelement (10) über ein Verstellelement (24) verstellbar in der Reinigungskammer (2) zum Anpassen an den jeweiligen Durchmesser des zu reinigenden Filters befestigt ist.

7. Anordnung nach einem der vorangehenden Ansprüche, **dadurch gekennzeichnet, dass** die Rotationsachse (7, 7A) zumindest eines Rotors (6, 6A) über einen zugeordneten Hubantrieb (9, 9A) in Längsachsenrichtung des Filters verstellbar ist.

8. Anordnung nach einem der Ansprüche 3 bis 7, **dadurch gekennzeichnet, dass** zumindest der erste Rotor (6) mit der horizontal ausgerichteten Rotationsachse (7) räumlich versetzt bezogen auf die vertikal ausgerichtete Hubachse (22) eines zugeordneten Hubantriebes (9) angeordnet ist.

9. Anordnung nach einem der vorangehenden Ansprüche, **dadurch gekennzeichnet, dass** zumindest ein Rotor (6, 6A) entlang der Rotationsachse (7, 7A) längenverstellbar ist.

10. Anordnung nach einem der vorangehenden Ansprüche, **dadurch gekennzeichnet, dass** zumindest ein Rotor (6, 6A) zumindest zwei einander radial bezogen auf die Rotationsachse (7, 7A) gegenüberliegende Reinigungsdüsen (5) aufweist.

11. Anordnung nach einem der vorangehenden Ansprüche, **dadurch gekennzeichnet, dass** zumindest ein Rotor (6, 6A) radial verstellbare Gewichte (15) zur Verstellung der Rotationsdrehzahl aufweist.

12. Anordnung nach einem der vorangehenden Ansprüche, **dadurch gekennzeichnet, dass** zumindest eine Reinigungsdüse (5, 5A) zum Verändern des Luftaustrittswinkels (W1, W2) verstellbar an dem zugeordneten Rotor (6, 6A) angeordnet ist.

13. Anordnung nach einem der vorangehenden Ansprüche, **dadurch gekennzeichnet, dass** die Drehgeschwindigkeit des Drehtellers (4) und die Hubgeschwindigkeit des Rotors (6, 6A) derart gewählt sind, dass bei jeder Umdrehung des Drehtellers (4) ein sich in Längsachsenrichtung des Filters erstreckender Überlappungsbereich (21) bei der umlaufenden Anblasfläche (20) an der inneren Oberfläche und der äußeren Oberfläche des Filters ergibt.

14. Anordnung nach einem der vorangehenden Ansprüche, **dadurch gekennzeichnet, dass** in der Reinigungskammer (2) ein Anpresselement (13) vorgesehen ist, welches der Oberseite des Filters zum Anpressen des Filters auf den Drehteller zugewandt ist.

## Claims

1. Assembly for cleaning a circular filter (1), having a cleaning chamber (2) having a drivable rotary plate (4) for receiving the filter and having at least one cleaning nozzle (5, 5A) that blows at the inner and/or the outer surface of the filter, **characterised in that** at least one rotor (6, 6A) that rotates about an axis of rotation (7, 7A) is provided, said rotor (6, 6A) having at least one cleaning nozzle (5, 5A) that is spaced radially from the axis of rotation (7, 7A), so as to enlarge the surface (20) that is being blown at, wherein the axis of rotation (7, 7A) of the rotor (6, 6A) is oriented at a predetermined angle (ϕ) with respect to the longitudinal axis (8) of the filter, wherein the angle (ϕ) comprises a value of approximately 80 degrees to 100 degrees, preferably 90 degrees.

2. Assembly according to Claim 1, **characterised in that** the longitudinal axis (8) of the filter is oriented approximately vertically and the axis of rotation (7, 7A) of the rotor (6, 6A) is oriented approximately horizontally in the cleaning chamber (2).

3. Assembly according to any one of the preceding claims, **characterised in that** at least one first rotor (6) is allocated to the outer surface of the filter and at least one second rotor (6A) is allocated to the inner surface of the filter.

4. Assembly according to Claim 3, **characterised in that** an air-guiding element (10) that is arranged below the rotor (6) is allocated at least to the first rotor (6) so as to guide the air flow to the surface of the filter.

5. Assembly according to Claim 4, **characterised in that** a region of the air-guiding element (10) that is facing the filter comprises a radius (23) for adapting to the filter surface.

6. Assembly according to Claim 4 or 5, **characterised in that** the air guiding element (10) can be adjusted by way of an adjusting element (24) in the cleaning chamber (2) so as to adapt to the respective diameter of the filter that is to be cleaned.

7. Assembly according to any one of the preceding claims, **characterised in that** the axis of rotation (7, 7A) at least of one rotor (6, 6A) can be adjusted by way of an allocated lift drive (9, 9A) in the direction of the longitudinal axis of the filter.

8. Assembly according to any one of the claims 3 to 7, **characterised in that** at least the first rotor (6) having the horizontally-oriented axis of rotation (7) is arranged spatially offset in relation to the vertically-oriented lifting axis (22) of an allocated lift drive (9).

9. Assembly according to any one of the preceding claims, **characterised in that** at least one rotor (6, 6A) can be adjusted longitudinally along the axis of rotation (7, 7A).

10. Assembly according to any one of the preceding claims, **characterised in that** at least one rotor (6, 6A) comprises at least two cleaning nozzles (5) that lie radially opposite one another in relation to the axis of rotation (7, 7A).

11. Assembly according to any one of the preceding claims, **characterised in that** at least one rotor (6, 6A) comprises weights (15) that can be adjusted radially so as to adjust the rotational speed.

12. Assembly according to any one of the preceding claims, **characterised in that** at least one cleaning nozzle (5, 5A) is arranged on the allocated rotor (6, 6A) in an adjustable manner so as to change the air-exit angle (W1, W2).

13. Assembly according to any one of the preceding claims, **characterized in that** the rotational speed of the rotary plate (4) and the lifting speed of the rotor (6, 6A) are selected in such a manner that in the case of each rotation of the rotary plate (4) an overlapping region (21) that extends in the direction of the longitudinal axis of the filter is produced on the inner surface and the outer surface of the filter as the surface (20) that is being blown at rotates.

14. Assembly according to any one of the preceding claims, **characterized in that** a pressure-loading element (13) is provided in the cleaning chamber (2), said pressure-loading element facing the upper side of the filter so as to press the filter onto the rotary plate.

## Revendications

1. Agencement pour nettoyer un filtre rond (1), comportant une chambre de nettoyage (2) avec un plateau rotatif entraînable (4) pour recevoir le filtre et avec au moins une buse de nettoyage (5, 5A) soufflant la surface intérieure et/ou extérieure du filtre, **caractérisé en ce qu'**au moins un rotor (6, 6A) tournant autour d'un axe de rotation (7, 7A) comportant au moins une buse de nettoyage (5, 5A) espacée radialement de l'axe de rotation (7, 7A) est prévu pour agrandir la surface de soufflage (20), dans lequel l'axe de rotation (7, 7A) du rotor (6, 6A) est orienté à un angle prédéterminé (ϕ) par rapport à l'axe longitudinal (8) du filtre, l'angle (ϕ) présentant une valeur d'environ 80 degrés à 100 degrés, de préférence 90 degrés.

2. Agencement selon la revendication 1, **caractérisé en ce que** l'axe longitudinal (8) du filtre est orienté dans la chambre de nettoyage (2) à peu près verticalement et l'axe de rotation (7, 7A) du rotor (6, 6A) à peu près horizontalement.

3. Agencement selon une des revendications précédentes, **caractérisé en ce qu'**au moins un premier rotor (6) est associé à la surface extérieure du filtre et au moins un deuxième rotor (6A) à la surface intérieure du filtre.

4. Agencement selon la revendication 3, **caractérisé en ce qu'**au moins le premier rotor (6) est associé à un élément de conduit d'air (10) disposé en dessous du rotor (6) pour guider le flux d'air vers la surface du filtre.

5. Agencement selon la revendication 4, **caractérisé en ce qu'**une zone de l'élément de conduit d'air (10) qui est en regard du filtre présente un rayon (23) pour s'adapter à la surface du filtre.

6. Agencement selon la revendication 4 ou 5, **caractérisé en ce que** l'élément de conduit d'air (10) est fixé de manière réglable dans la chambre de nettoyage (2) par le biais d'un élément de réglage (24) pour s'adapter au diamètre respectif du filtre à nettoyer.

7. Agencement selon une des revendications précédentes, **caractérisé en ce que** l'axe de rotation (7, 7A) d'au moins un rotor (6, 6A) est réglable dans la direction de l'axe longitudinal du filtre par le bais d'un entraînement de levage associé (9, 9A).

8. Agencement selon une des revendications 3 à 7, **caractérisé en ce qu'**au moins le premier rotor (6) est disposé avec l'axe de rotation orienté horizontalement (7) de manière décalée spatialement par rapport à l'axe de levage orienté verticalement (22) d'un entraînement de levage associé (9).

9. Agencement selon une des revendications précédentes, **caractérisé en ce qu'**au moins un rotor (6, 6A) est réglable en longueur le long de l'axe de rotation (7, 7A).

10. Agencement selon une des revendications précédentes, **caractérisé en ce qu'**au moins un rotor (6, 6A) présente au moins deux buses de nettoyage (5) opposées l'une à l'autre radialement par rapport à l'axe de rotation (7, 7A).

11. Agencement selon une des revendications précédentes, **caractérisé en ce qu'**au moins un rotor (6, 6A) présente des poids réglables radialement (15) pour régler la vitesse de rotation.

12. Agencement selon une des revendications précédentes, **caractérisé en ce qu'**au moins une buse de nettoyage (5, 5A) est disposée de manière réglable sur le rotor associé (6, 6A) pour modifier l'angle de sortie d'air (W1, W2).

13. Agencement selon une des revendications précédentes, **caractérisé en ce que** la vitesse de rotation du plateau rotatif (4) et la vitesse de levage du rotor (6, 6A) sont choisies de telle sorte que, à chaque tour du plateau rotatif (4), on obtient une zone de chevauchement (21) qui s'étend dans la direction de l'axe longitudinal du filtre au niveau de la surface de soufflage périphérique (20) sur la surface intérieure et la surface extérieure du filtre.

14. Agencement selon une des revendications précédentes, **caractérisé en ce que**, dans la chambre de nettoyage (2), un élément de compression (13) est prévu en regard de la face supérieure du filtre pour compresser le filtre sur le plateau rotatif.
